Europäisches Patentamt

European Patent Office

Office européen des brevets

(11) Veröffentlichungsnummer: **0 001 222**

**A1**

# (12) EUROPÄISCHE PATENTANMELDUNG

(21) Anmeldenummer: 78100755.4

(22) Anmeldetag: 28.08.78

(51) Int. Cl.²: **H 02 K 5/08**
**F 16 M 1/04**
**//F23D11/36, H02K9/22**

(30) Priorität: 31.08.77 DE 2739125

(43) Veröffentlichungstag der Anmeldung:
04.04.79 Patentblatt 79/7

(84) Benannte Vertragsstaaten:
BE CH FR GB NL SE

(71) Anmelder: Hanning Elektro-Werke GmbH & Co.
Friedrichstrasse 16
D-4800 Bielefeld(DE)

(72) Erfinder: Mehrmann, Fritz
Eichenweg 1a
D-4936 Augustdorf(DE)

(74) Vertreter: Hentzschel, Hans-Jürgen, Dipl.-Ing.
Am Hohen Ufer 8
D-4970 Bad Oeynhausen 1(DE)

(54) Elektrisch betriebener Ölbrennermotor.

(57) Bei einem elektrisch betriebenen Oelbrennermotor sind das Statorblechpaket (2) und die darauf angeordnete Erregerwicklung (3) weitgehend mit Kunststoff (8) umhüllt. Zur besseren Abführung der Verlustwärme des Motors verbindet die Kunststoffumhüllung (8) des Stators (1) ein das B-seitige Lager (6) der Rotorwelle (5) aufnehmendes sowie den Pumpeneinpass (9) bildendes im wesentlichen hohlzylindrisches Metallteil (10) mit einem als Motorbefestigung am Gebläse des Oelbrenners dienenden A-seitigen Metallflansch (11), an dem gleichzeitig eine das A-seitige Lager (7) der Rotorwelle (5) haltende, bei der Motormontage eingesetzte Endscheibe (13) befestigt ist. Die Wärmeabfuhr lässt sich weiterhin günstig beeinflussen, wenn das B-seitige Metallteil (10) und/oder der A-seitige Metallflansch (11) so weit an den Stator (1) herangeführt sind, dass sie in unmittelbarer Berührung mit dem Statorblechpaket (2) stehen. Ausserdem kann zum selben Zweck in die Kunststoffumhüllung (8) des Stators (1) ihre Wärmeleitfähigkeit erhöhendes Füllmaterial eingeschlossen sein, und die Kunststoffumhüllung (8) kann im Statorblechpaket (2) vorgesehene Nietlöcher (16) durchsetzen.

Hanning Elektro-Werke GmbH & Co., 4800 Bielefeld


Elektrisch betriebener Ölbrennermotor


Die Erfindung betrifft einen elektrisch betriebenen Ölbrennermotor, dessen Statorblechpaket und die darauf angeordnete
Erregerwicklung des Stators weitgehend mit Kunststoff umhüllt sind.

Nach dem DT-GM 18 85 242 ist ein Elektromotor mit einem
Kunststoffgehäuse bekannt, in das sowohl der Stator als auch
ein Lager der Rotorwelle eingebettet sind. Dadurch wird ein
einfacher Motoraufbau sowie eine beschädigungssichere Isolation der Statorspule und ihrer Kabelanschlüsse erreicht.
Wollte man einen solchen Elektromotor als Ölbrennermotor einsetzen, so würden jedoch Schwierigkeiten hinsichtlich der
Wärmeableitung aus dem Motor auftreten, weshalb sich diese
Bauform hierfür als ungeeignet erweist.

Aufgabe der Erfindung ist es, einen elektrisch betriebenen
Ölbrennermotor der eingangs genannten Art verfügbar zu
machen, der unter Beibehaltung aller erwähnten Vorzüge eines
mit Kunststoff umhüllten Stators die notwendigen Voraussetzungen schafft, um die Verlustwärme des Motors besser abführen zu können.

Die von der Erfindung vorgeschlagene Lösung der gestellten Aufgabe erfolgt dadurch, daß die Kunststoffumhüllung des Stators ein das B-seitige Lager der Rotorwelle aufnehmendes sowie den Pumpeneinpaß bildendes im wesentlichen hohlzylindrisches Metallteil mit einem A-seitigen Metallflansch verbindet, der als Motorbefestigung am Gebläse des Ölbrenners dient, und an dem eine das A-seitige Lager haltende ,bei der Motormontage eingesetzte Endscheibe befestigt ist. Auf Grund dieser Maßnahme wird die im Motor entstehende Verlustwärme an seinen Stirnseiten über die Rotorwelle und die sie führenden Lager sowie die dortigen Metallteile einerseits an die kühles Medium fördernde Ölpumpe und andererseits an das Gebläse des Ölbrenners abgeleitet.

Die mit der Erfindung erzielte Wirkung wird noch verbessert, wenn nach einem weiteren Erfindungsmerkmal das B-seitige Metallteil und/oder der A-seitige Metallflansch so weit an den Stator herangeführt sind, daß sie in unmittelbarer Berührung mit dem Statorblechpaket stehen. Um auch die Kunststoffumhüllung zur Wärmeabfuhr heranzuziehen, kann außerdem in die Kunststoffumhüllung des Stators ihre Wärmeleitfähigkeit erhöhendes Füllmaterial eingeschlossen sein. Hierzu ist es ferner zweckmäßig, die Kontaktfläche zwischen dem den Stator umhüllenden Kunststoff und dem Statorblechpaket zu vergrößern, indem die Kunststoffumhüllung des Stators im Statorblechpaket vorgesehene Nietlöcher durchsetzt.

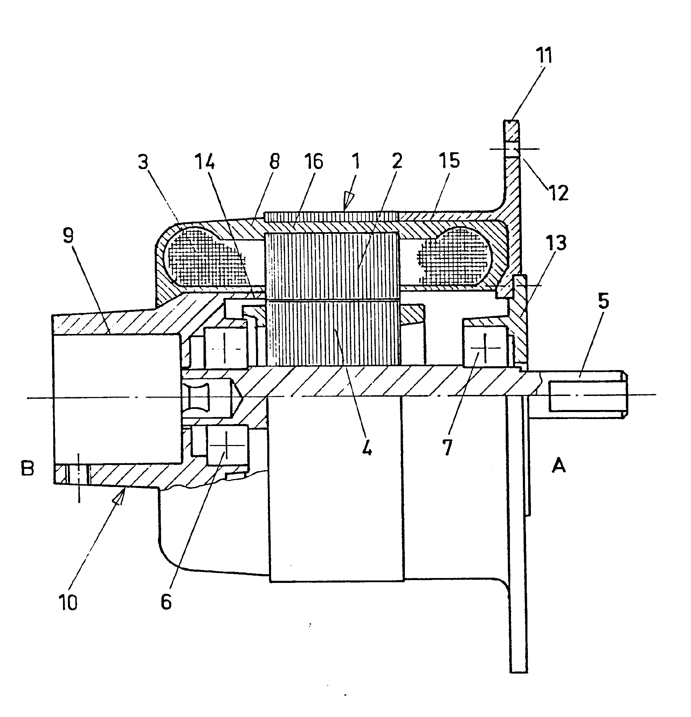

Ein Ausführungsbeispiel des Anmeldungsgegenstandes wird an Hand der Zeichnung beschrieben. Darin ist ein erfindungsgemäßer Ölbrennermotor in der Seitenansicht, zum Teil axial geschnitten, dargestellt.

Der abgebildete Ölbrennermotor besteht aus dem Stator 1 mit dem Statorblechpaket 2 und der darauf angeordneten Erregerwicklung 3 sowie dem innerhalb des Statorblechpaketes 2 umlaufenden Rotor 4, dessen Rotorwelle 5 an beiden Enden in Lagern 6 und 7 geführt ist. Sowohl das Statorblechpaket 2 als auch die stirnseitig aus ihm heraustretende Erregerwicklung 3 sind mit einer Kunststoffumhüllung 8 versehen, die als Motorgehäuse dient und gleichzeitig eine die Erregerwicklung 3 vor Beschädigungen schützende Isolation bewirkt.

Entsprechend den Vorschlägen der Erfindung verbindet die Kunststoffumhüllung 8 des Stators 1 eine das B-seitige Lager 6 der Rotorwelle 5 aufnehmendes sowie den Pumpeneinpaß 9 bildendes, im wesentlichen hohlzylindrisches Metallteil 1o mit einem A-seitigen Metallflansch 11, der zur Befestigung des gezeigten Motors am Gebläse des Ölbrenners mit Umfangsbohrungen 12 versehen ist. Darüber hinaus trägt er eine das A-seitige Lager 7 haltende Endscheibe 13, die
erst bei der Motormontage mit dem Metallflansch 11 verschraubt
wird, nachdem der Rotor 4 mit der Rotorwelle 5 in das Statorblechpaket 2 eingeschoben worden ist.

Zum Zwecke einer besonders guten Ableitung der entstehenden
Motorwäre an die auf der B-Seite des Motors befindliche
Pumpe   sowie das A-seitig angrenzende Gebläse   des
Ölbrenners über das hohlzylindrische Metallteil 1o und
den Metallflansch 11 sind diese so weit mit rohrförmigen
Ansätzen 14 und 15 an den Stator 1 herangeführt, daß sie
in unmittelbarer Berührung mit dem Statorblechpaket 2 stehen.
Zusätzlich soll in die Kunststoffumhüllung 8 des Stators 1
ihre Wärmeleitfähigkeit erhöhendes Füllmaterial, beispielsweise in Form von Glasfasern und/oder Glaskugeln kleinsten
Durchmessers, eingeschlossen sein. Ebenso füllt sie im
Statorblechpaket 2 vorgesehene Nietlöcher 16 aus, wodurch
dieses von der Kunststoffumhüllung 8 in einfacher Weise
zusammengehalten wird und sich weiterhin eine die Wärmeabfuhr begünstigende Vergrößerung der Kontaktfläche zwischen
dem Statorblechpaket 2 und der Kunststoffumhüllung 8 ergibt.

Mit dem zur Beschreibung gelangten Ölbrennermotor ist eine
einfache sowie preisgünstige Konstruktion geschaffen worden,
die nicht nur weitgehenden Schutz gegen mechanische Beschädigungen, Feuchtigkeit und Verschmutzung, sondern daneben auch
gute thermische Eigenschaften bezüglich der im Motor entstehenden Verlustwärme bietet.

Hanning Elektro-Werke GmbH & Co., 4800 Bielefeld

S c h u t z a n s p r ü c h e

1.) Elektrisch betriebener Ölbrennermotor, dessen Statorblechpaket und die darauf angeordnete Erregerwicklung
des Stators weitgehend mit Kunststoff umhüllt sind,
dadurch gekennzeichnet, daß die Kunststoffumhüllung (8)
des Stators (1) ein das B-seitige Lager (6) der Rotorwelle (5) aufnehmendes sowie den Pumpeneinpaß (9)
bildendes im wesentlichen hohlzylindrisches Metallteil
(1o) mit einem A-seitigen Metallflansch (11) verbindet,
der als Motorbefestigung am Gebläse des Ölbrenners dient,
und an dem eine das A-seitige Lager (7) haltende, bei
der Motormontage eingesetzte Endscheibe (13) befestigt ist.

2.) Ölbrennermotor nach Anspruch 1, dadurch gekennzeichnet,
daß das B-seitige Metallteil (1o) und/oder der A-seitige
Metallflnasch (11) so weit an den Stator herangeführt
sind, daß sie in unmittelbarer Berührung mit dem
Statorblechpaket (2) stehen.

0001222 1145

3.) Ölbrennermotor nach Anspruch 1 oder 2 dadurch gekennzeichnet, daß in die Kunststoffumhüllung (8) des
Stators (1) ihre Wärmeleitfähigkeit erhöhendes
Füllmaterial eingeschlossen ist.

4.) Ölbrennermotor nach einer der vorhergehenden Ansprüche,
dadurch gekennzeichnet, daß die Kunststoffumhüllung (8)
des Stators (1) im Statorblechpaket (2) vorgesehene
Nietlöcher (16) durchsetzt.

**Europäisches Patentamt**

# EUROPÄISCHER RECHERCHENBERICHT

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>DE - A - 2 307 991</u> (R. HALM)<br>* Seite 4, Absätze 2 und 3; Seite 5, Absatz 1 * | 1,2 | H 02 K 5/08//<br>F 23 D 11/36<br>H 02 K 9/22<br>F 16 M 1/04 |
| | — | | |
| | <u>US - A - 3 041 976</u> (J.T. MAYNARD)<br>* Spalte 2, Zeilen 28-60 * | 1 | |
| | — | | |
| | <u>DE - A - 1 922 427</u> (A. BLUM)<br>* Seite 4, Absätze 1 und 2 * | 1 | |
| | — | | **RECHERCHIERTE SACHGEBIETE (Int. Cl.²)** |
| | <u>US - A - 3 742 595</u> (R.E. LYKES)<br>* Spalte 3, Zeilen 37-53 * | 1 | F 23 D 11/36<br>H 02 K 5/08<br>5/18<br>9/22 |
| | — | | |
| | <u>DE - A - 1 551 653</u> (DANFOSS)<br>* Seite 4, Zeile 18 bis Seite 5, Zeile 4 * | 1 | |
| | — | | |
| | <u>AT - B - 151 584</u> (SIEMENS)<br>* Seite 1, Zeilen 22-25 * | 2 | |
| | — | | **KATEGORIE DER GENANNTEN DOKUMENTE** |
| | <u>DE - U - 1 867 072</u> (LOHER & SOEHNE)<br>* Seite 5, Absatz 1, letzter Satz * | 3 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | — | | |
| | <u>DE - B - 1 005 170</u> (LICENTIA)<br>* Spalte 2, Zeilen 39-45 * | 4 | |
| | —<br>./. | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Berlin | 08-11-1978 | GEBNER |

EPA form 1503.1 06.78

**Europäisches Patentamt**

**EUROPÄISCHER RECHERCHENBERICHT**

| Kategorie | Kennzeichnung des Dokuments mit Angabe, soweit erforderlich, der maßgeblichen Teile | betrifft Anspruch |
|---|---|---|
| EINSCHLÄGIGE DOKUMENTE | | |
| A | <u>FR - A - 1 546 664</u> (LICENTIA) | 1 |
| | -- | |
| D | <u>DE - U - 1 885 242</u> (W.H. BRASKAMP) & GB - A - 958 871 | |
| | ----- | |

KLASSIFIKATION DER ANMELDUNG (Int.Cl.²)

RECHERCHIERTE SACHGEBIETE (Int. Cl.²)

EPA Form 1503.2  06.78